# EUROPÄISCHE PATENTSCHRIFT

(11) **EP 3 127 221 B1**
(45) Veröffentlichungstag und Bekanntmachung des Hinweises auf die Patenterteilung: **08.05.2019**
(21) Anmeldenummer: 15725368.3
(22) Anmeldetag: 01.06.2015
(51) Int. Cl.: H02K 5/173, H02K 7/08, F16C 33/66, F16C 33/78, F16C 33/10

(54) **VORRICHTUNG ZUM SCHMIEREN EINES WÄLZLAGERS EINES ELEKTROMOTORS**
DEVICE FOR LUBRICATING THE ROLLING BEARING OF AN ELECTRICAL MOTOR
DISPOSITIF POUR LA LUBRIFICATION DU PALIER À ROULEMENT D'UN MOTEUR ÉLECTRIQUE

(30) Priorität: 06.06.2014 EP 14171573
(43) Veröffentlichungstag der Anmeldung: 08.02.2017
(73) Patentinhaber: Siemens Aktiengesellschaft, 80333 München (DE)
(72) Erfinder: NIEDERMEYER, Josef, 91161 Hilpoltstein (DE); RESSEL, Ekkehard, 91560 Heilsbronn (DE)
(86) Internationale Anmeldenummer: PCT/EP2015/062095
(87) Internationale Veröffentlichungsnummer: WO 2015/185484

(56) Entgegenhaltungen:
- DE-A1- 19 725 970
- DE-B- 1 093 387
- DE-B- 1 139 705
- DE-B- 1 215 735
- DE-C- 657 586
- JP-A- 2006 345 675
- JP-A- 2011 239 584
- US-A1- 2011 280 749
- US-A1- 2013 272 873

## Beschreibung

Die Erfindung betrifft eine Vorrichtung zum Schmieren eines Wälzlagers eines Elektromotors.

Die Wellen von Elektromotoren, insbesondere Elektromotoren großer Bauart, können entweder mittels Gleitlagern oder mittels Wälzlagern gelagert sein. Dabei muss jeweils eine ausreichende Schmierung sichergestellt werden.

Gleitlager werden aus Kostengründen seltener und nur bei technischer Notwendigkeit eingesetzt.

Wälzlager werden bei großen Elektromotoren meist mit Fettschmierung betrieben. Dabei ist meist eine Nachschmierung nach einer bestimmten Anzahl von Betriebsstunden (beispielsweise 1000 Betriebsstunden) erforderlich.

Aus der US 2013/272873 A1 ist Elektromotor mit einer Drehantriebswelle, einem Lager zur Lagerung des Drehantriebswelle entlang einer Achse bekannt, die sich entlang der Länge des Rotorblattes erstreckt. Zum Schmieren der Lager ist ein Schmiersystem vorgesehen, die eine Ölwanne aufweist sowie eine Pumpe, um Schmiermittel aus dem Sumpf zum Lager zu pumpen.

Der Erfindung liegt die Aufgabe zugrunde, eine verbesserte Vorrichtung zum Schmieren eines Wälzlagers eines Elektromotors anzugeben.

Die Aufgabe wird erfindungsgemäß gelöst durch eine Vorrichtung mit den Merkmalen des Anspruchs 1.

Vorteilhafte Ausgestaltungen der Erfindung sind Gegenstand der Unteransprüche.

Eine erfindungsgemäße Vorrichtung zum Schmieren eines Wälzlagers eines Elektromotors umfasst eine an einem Elektromotor anordbare Ölvorratskammer mit einem Ölsumpf und einen auf einer Welle des Elektromotors direkt oder indirekt mitlaufenden und durch den Ölsumpf laufenden Ölförderring, mit dem bei Rotation der Welle Öl aus dem Ölsumpf in einen um die Welle und benachbart zum Wälzlager angeordneten Schmierraum transportierbar ist.

Durch die erfindungsgemäße Vorrichtung wird eine zuverlässige und autarke Dauerschmierung zur Verfügung gestellt. Gegenüber einem fettgeschmierten Wälzlager eines Elektromotors entfällt durch die erfindungsgemäße Vorrichtung der regelmäßige Aufwand zum Nachfetten. Auf diese Weise werden Kosten gespart. Zudem kann durch das Öl eine Kühlung des Wälzlagers erfolgen und die Lebensdauer des Wälzlagers verlängert werden.

Die Ölvorratskammer kann an einer Außenseite oder an einer Innenseite des Elektromotors angeordnet sein. Statt des Ölförderrings kann auch eine Ölförderscheibe vorgesehen sein.

In einer Ausführungsform der Erfindung kann auf der Welle eine Buchse angeordnet sein, auf der der Ölförderring läuft. Die Buchse kann aus einem Material gebildet sein, durch das der Ölförderring einem geringeren Verschleiß unterliegt als direkt auf der Welle. Zudem kann die Buchse auf ihrer Außenseite einfacher entsprechend den Anforderungen zur Führung des Ölförderrings mit einer Kontur versehen werden, ohne dass die Stabilität der Welle des Elektromotors beeinträchtigt wird. Beispielsweise kann die Buchse auf die Welle aufgeschrumpft sein..

In einer Ausführungsform der Erfindung weist der Ölförderring einen Innendurchmesser auf, der deutlich größer ist als ein Außendurchmesser der Welle und/oder der Buchse. Auf diese Weise kann der Ölsumpf relativ weit von der Welle beabstandet sein.

In einer Ausführungsform der Erfindung weist die Buchse oder die Welle eine Außenfläche auf, deren Durchmesser sich axial vom Wälzlager weg verjüngt. Auf diese Weise wird der Ölförderring während der Rotation der Welle vom Wälzlager weggeführt, so dass er nicht damit in Kontakt kommt und so Beschädigungen vermieden werden.

In einer Ausführungsform der Erfindung weist die Buchse oder die Welle eine Außenfläche auf, in der eine umlaufende Schulter oder Nut vorgesehen ist, deren Durchmesser gegenüber einem angrenzenden Bereich der Außenfläche stufenförmig reduziert ist, um den Ölförderring innerhalb der Schulter in einer bestimmten Axialposition auf der Buchse oder der Welle zu halten. Insbesondere in Verbindung mit der sich verjüngenden Außenfläche der Buchse oder Welle kann so eine genaue Axialposition des Ölförderrings erreicht und gehalten werden.

In einer Ausführungsform der Erfindung sind ein oder mehrere Wellendichtringe zum Abdichten der Welle in Axialrichtung hinter dem Wälzlager zum Elektromotor hin und/oder vom Schmierraum zu einer Umgebung hin vorgesehen, um Schmierstoffverluste und eine Kontamination des Inneren des Elektromotors und seiner Umgebung mit Öl zu vermeiden.

Erfindungsgemäß ist angrenzend an den Schmierraum in Axialrichtung vom Elektromotor weg auf der Welle eine äußere Schleuderscheibe angeordnet. Zusätzlich oder alternativ ist angrenzend an das Wälzlager in Axialrichtung zum Elektromotor hin auf der Welle eine innere Schleuderscheibe angeordnet. Auf diese Weise können die Wellendichtringe vor zu großen Ölmengen geschützt werden.

Erfindungsgemäß weist die äußere Schleuderscheibe und/oder die innere Schleuderscheibe jeweils auf einer dem Schmierraum zugewandten Seite eine umlaufende Hohlkehle auf, deren Querschnitt in Richtung einer radialen Außenseite der jeweiligen Schleuderscheibe einen geringeren Radius aufweist als in Richtung einer radialen Innenseite der jeweiligen Schleuderscheibe.

In einer Ausführungsform der Erfindung ist ein Rücklaufkanal zum Zurückführen von Öl aus einem Bereich hinter dem Wälzlager in Richtung zum Elektromotor in den Ölsumpf vorgesehen, so dass eine Zirkulation entsteht und eventuell auftretender Abrieb aus dem Wälzlager entfernt wird und sich auf dem Grund des Ölsumpfs sammelt, wo er beispielsweise bei einem Ölwechsel entfernt werden kann.

In einer Ausführungsform der Erfindung sind hinter dem Wälzlager in Richtung zum Elektromotor zwei Wellendichtringe nacheinander angeordnet, wobei zwischen den beiden Wellendichtringen ein Druckausgleichskanal vorgesehen ist, der mit einer Umgebung des Elektromotors verbunden ist. Auf diese Weise werden eventuell auftretende Über- oder Unterdrücke reduziert.

In einer Ausführungsform der Erfindung weist der Ölförderring einen annähernd trapezförmigen Querschnitt auf, wobei die längere der beiden parallelen Seiten des Trapezes nach innen weist.

In einer Ausführungsform der Erfindung ist in der Ölvorratskammer eine Ölzulauföffnung und an einem Grund des Ölsumpfes eine mit einer Ölablassschraube verschließbare Ölablassöffnung vorgesehen.

In einer Ausführungsform der Erfindung ist in der Ölvorratskammer ein Ölablauf vorgesehen, so dass die Ölvorratskammer über die Ölzulauföffnung und den Ölablauf in einen Ölkreislauf einbindbar ist.

In einer weiteren Ausführungsform der Erfindung ist in der Ölvorratskammer ein Schauglas angeordnet, um den Ölstand und die Färbung des Öls kontrollieren zu können.

Der Wellendichtring oder die Wellendichtringe können jeweils als berührende oder berührungslose Dichtung ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine schematische Perspektivansicht einer Vorrichtung zum Schmieren eines Wälzlagers an einem Elektromotor,
- FIG 2: einen schematischen Längsschnitt der Vorrichtung zum Schmieren des Wälzlagers,
- FIG 3: einen schematischen Detailschnitt der Vorrichtung zum Schmieren des Wälzlagers, und
- FIG 4: einen weiteren schematischen Detailschnitt der Vorrichtung zum Schmieren des Wälzlagers.

Einander entsprechende Teile sind in allen Figuren mit den gleichen Bezugszeichen versehen.

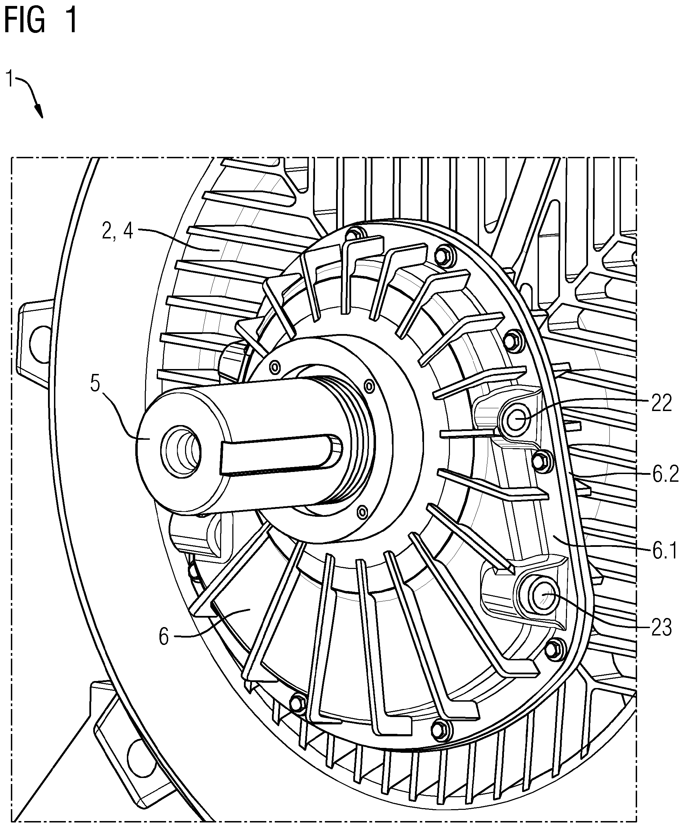

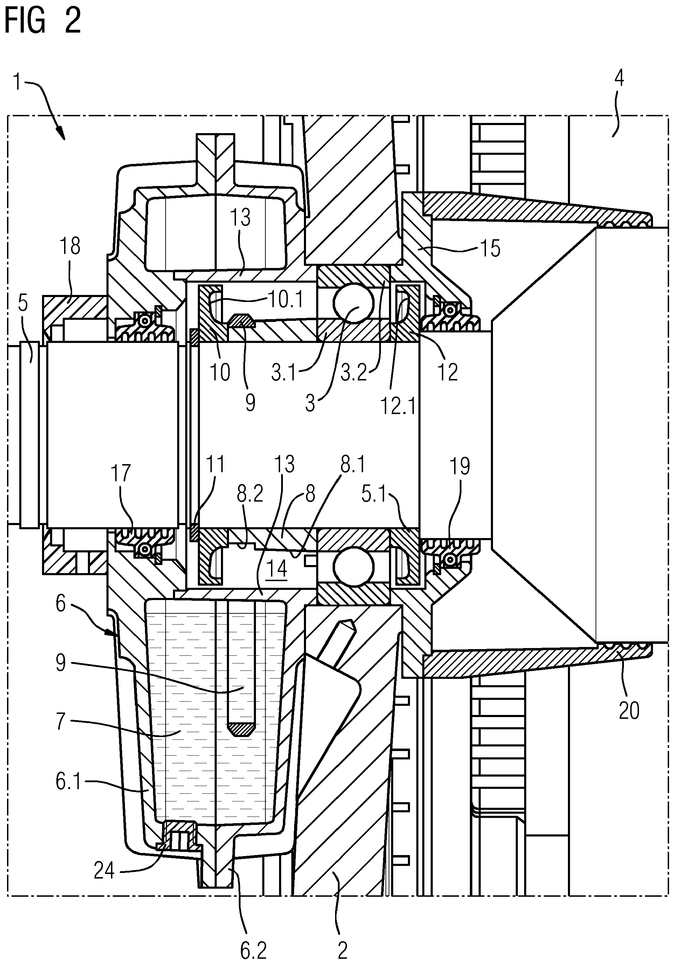

Figur 1 zeigt eine schematische Perspektivansicht einer Vorrichtung 1 zum Schmieren eines Wälzlagers (in Figur 1 nicht dargestellt) in einem Lagerschild 2 eines Elektromotors 4. Figur 2 zeigt einen schematischen Längsschnitt der Vorrichtung 1 zum Schmieren des Wälzlagers 3 im Lagerschild 2 des Elektromotors 4. Das Wälzlager 3 lagert eine Welle 5 des Elektromotors 4 und ist im Lagerschild 2 angeordnet.

Die Vorrichtung 1 umfasst eine Ölvorratskammer 6, die aus zwei miteinander verbundenen, beispielsweise verschraubten oder verrasteten, Gehäuseteilen 6.1, 6.2 gebildet sein kann.

In der Ölvorratskammer 6 ist ein Ölsumpf 7 vorgesehen, der in einer in Figur 2 gezeigten Gebrauchslage der Vorrichtung 1 unten liegt. Der Ölsumpf 7 ist zumindest zu einem Teil mit einem Schmierstoff, beispielsweise einem Öl, gefüllt.

Auf der durch die Ölvorratskammer 6 verlaufenden Welle 5 des Elektromotors 4 ist eine Buchse 8 angeordnet. Auf der Buchse 8 ist lose mitlaufend ein Ölförderring 9 angeordnet, dessen Innendurchmesser deutlich größer ist als ein Außendurchmesser der Buchse 8, derart, dass der Ölförderring 9 in Gebrauchslage oben auf der Buchse 8 aufliegt und in Gebrauchslage unten durch den Ölsumpf 7 verläuft. Der Ölförderring 9 wird so bei Rotation der Welle 5 durch diese reibschlüssig in Rotation versetzt und fördert auf diese Weise Öl aus dem Ölsumpf 7 auf die Buchse 8 und/oder durch Schleudern des Öls vom Ölförderring 9 und/oder von der Buchse 8 an eine radiale Außenwandung 13 eines außen an die Buchse 8 angrenzenden Schmierraumes 14.

Die Buchse 8 weist eine Außenfläche 8.1 auf, deren Durchmesser sich axial vom Wälzlager 3 weg verjüngt. Zusätzlich weist die Außenfläche 8.1 der Buchse 8 eine umlaufende Schulter 8.2 oder Nut auf, deren Durchmesser gegenüber dem angrenzenden Bereich der Außenfläche 8.1 stufenförmig reduziert ist, so dass der Ölförderring 9 innerhalb der Schulter 8.2 in einer bestimmten Axialposition auf der Buchse 8 gehalten wird. Für den Fall, dass der Ölförderring 9 sich nicht in der Schulter 8.2 befindet, sorgt die sich in Richtung der Schulter 8.2 verjüngende Außenfläche 8.1 der Buchse 8 dafür, dass der Ölförderring 9 bei Rotation der Welle 5 in die Schulter 8.2 geführt wird.

In Axialrichtung zum Wälzlager 3 hin grenzt die Buchse 8 an einen Innenring 3.1 des Wälzlagers 3 an. In Axialrichtung vom Wälzlager 3 weg grenzt die Buchse 8 an eine auf der Welle 5 angeordnete äußere Schleuderscheibe 10 an, die mittels eines Sicherungsrings 11 in Axialposition auf der Welle 5 gehalten sein kann und radial annähernd bis zur radialen Außenwandung 13 des Schmierraumes 14 reicht, jedoch berührungsfrei von der radialen Außenwandung 13 beabstandet ist.

Eine weitere, innere Schleuderscheibe 12 ist in Axialrichtung zum Elektromotor 4 hin hinter dem Innenring 3.1 des Wälzlagers 3 angeordnet und in Axialrichtung durch einen Kragen 5.1 der Welle 5 gehalten, dessen Durchmesser größer ist als der Teil der Welle 5, auf dem die innere Schleuderscheibe 12 sitzt. Die innere Schleuderscheibe 12 reicht radial annähernd bis zu einem einen Außenring 3.2 des Wälzlagers 3 in Axialrichtung zum Elektromotor 4 hin haltenden inneren Lagersitz 15, ist jedoch berührungsfrei vom inneren Lagersitz 15 beabstandet.

Ein äußerer Lagersitz zur axialen Fixierung des Außenrings 3.2 in Richtung vom Elektromotor 4 weg kann durch die radiale Außenwandung 13 gebildet sein.

Die Schleuderscheiben 10, 12 weisen auf ihren einander zugewandten Seiten jeweils eine umlaufende Hohlkehle 10.1, 12.1 auf, deren Querschnitt in Richtung einer radialen Außenseite der Schleuderscheibe 10, 12 einen geringeren Radius aufweist als in Richtung einer radialen Innenseite der Schleuderscheibe 10, 12. Das an die radiale Außenwandung 13 geschleuderte Öl und an der Buchse 8 haftende gelangt von dort in das Wälzlager 3.

In und außerhalb der Ölvorratskammer 6 sind in Axialrichtung vom Elektromotor 4 wegweisend ein oder mehrere Wellendichtringe 17, 18 auf der Welle 5 vorgesehen, um das Austreten von eventuell hinter die äußere Schleuderscheibe 10 gelangtem Öl zu verhindern. Ebenso ist in Axialrichtung zum Elektromotor 4 hin hinter der inneren Schleuderscheibe 12 ein Wellendichtring 19 auf der Welle 5 vorgesehen.

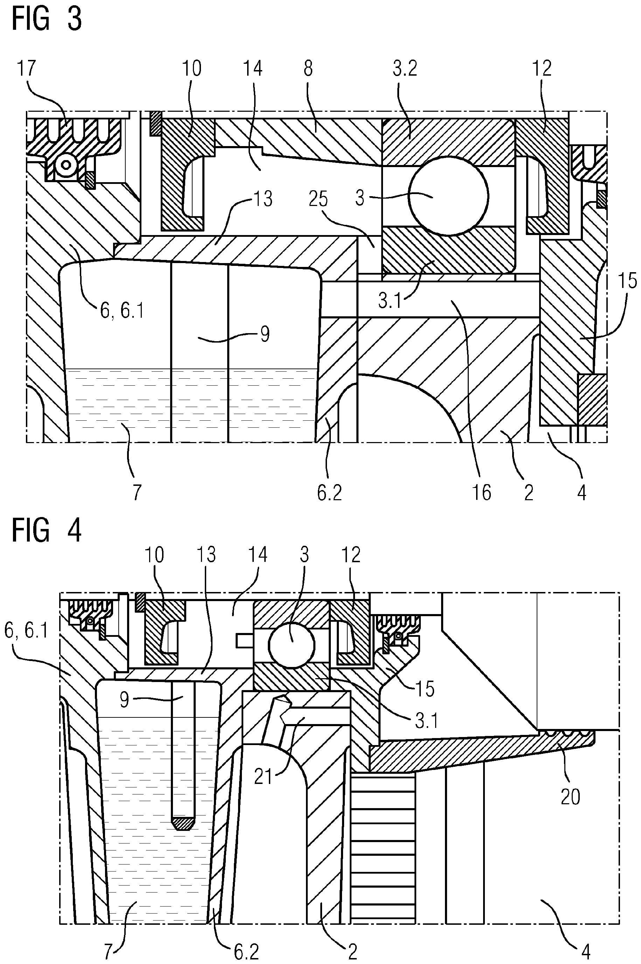

Figuren 3 und 4 zeigen jeweils verschiedene schematische Detailschnitte der Vorrichtung 1 zum Schmieren des Wälzlagers 3.

Aus dem Bereich hinter dem Wälzlager 3 in Richtung des Elektromotors 4 kann das Öl durch einen Spalt zwischen der inneren Schleuderscheibe 12 und dem Außenring 3.2 des Lagers und durch einen im Lagerschild 2 vorgesehenen Rücklaufkanal 16 in den Ölsumpf 7 zurückfließen, so dass eine Zirkulation entsteht und eventuell auftretender Abrieb aus dem Wälzlager 3 entfernt wird und sich auf dem Grund des Ölsumpfs 7 sammelt, wo er beispielsweise bei einem Ölwechsel entfernt werden kann.

In der Außenwandung 13 können ein oder mehrere Öffnungen 25 vorgesehen sein, durch die Öl aus dem Schmierraum 14 in den Ölsumpf 7 zurückfließen kann. Die Öffnung 25 ist so bemessen, dass ein Ölniveau im Schmierraum 14 vor dem Wälzlager 3 und damit eine dem Wälzlager 3 zugeführte Menge Öl genau bemessen werden kann.

Weiter in Richtung des Elektromotors 4 kann ein weiterer Wellendichtring 20 zur Reduzierung von eventuell auftretenden Über- oder Unterdrücken vorgesehen sein. Hierzu ist zwischen den beiden Wellendichtringen 19 und 20 ein Druckausgleichskanal 21 vorgesehen, der mit einer Umgebung des Elektromotors 4 verbunden ist.

Die Ölvorratskammer 6 kann ferner eine Ölzulauföffnung 22 aufweisen, durch die Öl eingefüllt werden kann. Weiter kann ein Schauglas 23 zur Kontrolle des Ölstandes vorgesehen sein. Anstelle des Schauglases 23 kann auch ein Ölablauf vorgesehen sein, so dass die Ölvorratskammer 6 über die Ölzulauföffnung und den Ölablauf in einen Ölkreislauf eingebunden werden kann. Ferner kann am Grund des Ölsumpfes 7 eine Ölablassschraube 24 vorgesehen sein.

Die Wellendichtringe 17, 18, 19, 20 können als berührende oder berührungslose Dichtung ausgeführt sein.

Im dargestellten Ausführungsbeispiel weist der Ölförderring 9 einen annähernd trapezförmigen Querschnitt auf, wobei die längere der beiden parallelen Seiten des Trapezes nach innen weist. In alternativen Ausführungsbeispielen sind andere Querschnittsformen des Ölförderrings 9 möglich.

In einem alternativen Ausführungsbeispiel kann der Ölförderring 9 auch direkt auf der Welle 5 laufend angeordnet sein, so dass auf die Buchse 8 verzichtet werden kann.

Die Schleuderscheiben 10, 12 schützen die Wellendichtringe 17, 18, 19, 20 vor zu großen Ölmengen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die angehängten Ansprüche definierten Schutzumfang der Erfindung zu verlassen.

## Patentansprüche

1. Vorrichtung (1) zum Schmieren eines Wälzlagers (3) eines Elektromotors (4), umfassend eine an einer Außenseite oder Innenseite des Elektromotors (4) anordbare Ölvorratskammer (6) mit einem Ölsumpf (7) und einen auf einer Welle (5) des Elektromotors (4) direkt oder indirekt mitlaufenden und durch den Ölsumpf (7) laufenden Ölförderring (9) oder Ölförderscheibe, mit dem oder der bei Rotation der Welle (5) Öl aus dem Ölsumpf (7) in einen um die Welle (5) und benachbart zum Wälzlager (3) angeordneten Schmierraum (14) transportierbar ist,
• wobei in einer radialen Außenwandung (13) des Schmierraums (14) ein oder mehrere Öffnungen (25) vorgesehen sind, durch die Öl aus dem Schmierraum (14) in den Ölsumpf (7) zurückfließen kann,
• wobei angrenzend an den Schmierraum (14) in Axialrichtung vom Elektromotor (4) weg auf der Welle (5) eine äußere Schleuderscheibe (10) angeordnet ist und wobei in Axialrichtung zum Elektromotor (4) hin auf der Welle (5) eine innere Schleuderscheibe (12) angeordnet ist und
• wobei die äußere Schleuderscheibe (10) und die innere Schleuderscheibe (12) jeweils auf einer dem Schmierraum (14) zugewandten Seite eine umlaufende Hohlkehle (10.1, 12.1) aufweist, deren Querschnitt in Richtung einer radialen Außenseite der jeweiligen Schleuderscheibe (10, 12) einen geringeren Radius aufweist als in Richtung einer radialen Innenseite der jeweiligen Schleuderscheibe (10, 12).

2. Vorrichtung (1) nach Anspruch 1, wobei auf der Welle (5) eine Buchse (8) angeordnet ist, auf der der Ölförderring (9) läuft.

3. Vorrichtung (1) nach einem der Ansprüche 1 oder 2, wobei der Ölförderring (9) einen Innendurchmesser aufweist, der deutlich größer ist als ein Außendurchmesser der Welle (5) und/oder der Buchse (8).

4. Vorrichtung (1) nach einem der vorhergehenden Ansprüche, wobei die Buchse (8) oder die Welle (5) eine Außenfläche (8.1) aufweist, deren Durchmesser sich axial vom Wälzlager (3) weg verjüngt.

5. Vorrichtung (1) nach einem der vorhergehenden Ansprüche, wobei die Buchse (8) oder die Welle (5) eine Außenfläche (8.1) aufweist, in der eine umlaufende Schulter (8.2) oder Nut vorgesehen ist, deren Durchmesser gegenüber einem angrenzenden Bereich der Außenfläche (8.1) stufenförmig reduziert ist, um den Ölförderring (9) innerhalb der Schulter (8.2) in einer bestimmten Axialposition auf der Buchse (8) oder der Welle (5) zu halten.

6. Vorrichtung (1) nach einem der vorhergehenden Ansprüche, wobei ein oder mehrere Wellendichtringe (17, 18, 19, 20) zum Abdichten der Welle (5) in Axialrichtung hinter dem Wälzlager (3) zum Elektromotor (4) hin und/oder vom Schmierraum (14) zu einer Umgebung hin vorgesehen sind.

7. Vorrichtung (1) nach einem der vorhergehenden Ansprüche, wobei ein Rücklaufkanal (16) zum Zurückführen von Öl aus einem Bereich hinter dem Wälzlager (3) in den Ölsumpf (7) vorgesehen ist.

8. Vorrichtung (1) nach einem der Ansprüche 6 und 7, wobei hinter dem Wälzlager (3) in Richtung zum Elektromotor (4) zwei Wellendichtringe (19, 20) nacheinander angeordnet sind, wobei zwischen den beiden Wellendichtringen (19, 20) ein Druckausgleichskanal (21) vorgesehen ist, der mit einer Umgebung des Elektromotors (4) verbunden ist.

9. Vorrichtung (1) nach einem der vorhergehenden Ansprüche, wobei der Ölförderring (9) einen annähernd trapezförmigen Querschnitt aufweist, wobei die längere der beiden parallelen Seiten des Trapezes nach innen weist.

10. Vorrichtung (1) nach einem der vorhergehenden Ansprüche, wobei in der Ölvorratskammer (6) eine Ölzulauföffnung (22) und an einem Grund des Ölsumpfes (7) eine mit einer Ölablassschraube (24) verschließbare Ölablassöffnung vorgesehen ist.

11. Vorrichtung (1) nach Anspruch 10, wobei in der Ölvorratskammer (6) ein Ölablauf vorgesehen ist, so dass die Ölvorratskammer (6) über die Ölzulauföffnung (22) und den Ölablauf in einen Ölkreislauf einbindbar ist.

12. Vorrichtung (1) nach einem der vorhergehenden Ansprüche, wobei in der Ölvorratskammer (6) ein Schauglas (23) angeordnet ist.

13. Vorrichtung (1) nach einem der Ansprüche 6 bis 12, wobei der Wellendichtring (17, 18, 19, 20) oder die Wellendichtringe (17, 18, 19, 20) als berührende oder berührungslose Dichtung ausgebildet sind.

## Claims

1. Device (1) for lubricating an antifriction bearing (3) of an electric motor (4), comprising an oil reservoir (6) which can be arranged on an exterior or interior of the electric motor (4) having an oil pan (7) and an oil delivery ring (9) or oil delivery disk which directly or indirectly moves along on a shaft (5) of the electric motor (4) and runs through the oil pan (7), and allows oil to be transported from the oil pan (7) into a lubrication chamber (14) located around the shaft (5) and adjacent to the antifriction bearing (3) when the shaft (5) rotates,
• wherein one or a number of openings (25), through which oil can flow back out of the lubrication chamber (14) into the oil pan (7), are provided in a radial outer wall (13) of the lubrication chamber (14),
• wherein an outer centrifugal disk (10) is arranged on the shaft (5) adjacent to the lubrication chamber (14) in the axial direction away from the electric motor (4) and wherein an inner centrifugal disk (12) is arranged on the shaft (5) in the axial direction toward the electric motor (4) and
• wherein the outer centrifugal disk (10) and the inner centrifugal disk (12) each have a peripheral groove (10.1, 12.1) on a side facing the lubrication chamber (14), the cross-section of which in the direction of a radial exterior of the respective centrifugal disk (10, 12) has a smaller radius than in the direction of a radial interior of the respective centrifugal disk (10, 12) .

2. Device (1) according to claim 1, wherein a bush (8), on which the oil delivery ring (9) runs, is arranged on the shaft (5) .

3. Device (1) according to one of claims 1 or 2, wherein the oil delivery ring (9) has an internal diameter, which is significantly larger than an external diameter of the shaft (5) and/or the bush (8).

4. Device (1) according to one of the preceding claims, wherein the bush (8) or the shaft (5) has an outer surface (8.1), the diameter of which tapers axially away from the antifriction bearing (3).

5. Device (1) according to one of the preceding claims, wherein the bush (8) or the shaft (5) has an outer surface (8.1), in which a peripheral shoulder (8.2) or groove is provided, the diameter of which is reduced in stages compared with an adjoining region of the outer surface (8.1), in order to keep the oil delivery ring (9) within the shoulder (8.2) at a certain axial position on the bush (8) or the shaft (5).

6. Device (1) according to one of the preceding claims, wherein one or a number of shaft sealing rings (17, 18, 19, 20) for sealing the shaft (5) are provided in the axial direction behind the anti-friction bearing (3) toward the electric motor (4) and/or away from the lubrication chamber (14) toward an environment.

7. Device (1) according to one of the preceding claims, wherein a return channel (16) for returning oil from a region behind the antifriction bearing (3) into the oil pan (7) is provided.

8. Device (1) according to one of claims 6 and 7, wherein two shaft sealing rings (19, 20) are arranged one behind the other behind the anti-friction bearing (3) in the direction toward the electric motor (4), wherein a pressure-equalisation channel (21) is provided between the two shaft sealing rings (19, 20), which is connected to an environment of the electric motor (4).

9. Device (1) according to one of the preceding claims, wherein the oil delivery ring (9) has an approximately trapeze-shaped cross-section, wherein the longer of the two parallel sides of the trapeze points inwards.

10. Device (1) according to one of the preceding claims, wherein an oil inlet opening (22) is provided in the oil reservoir (6) and an oil outlet opening which can be closed with an oil outlet screw (24) is provided on a base of the oil pan (7).

11. Device (1) according to claim 10, wherein an oil runout is provided in the oil reservoir (6), so that the oil reservoir (6) can be embedded in an oil circuit by way of the oil inlet opening (22) and the oil runout.

12. Device (1) according to one of the preceding claims, wherein a window (23) is arranged in the oil reservoir (6).

13. Device (1) according to one of claims 6 to 12, wherein the shaft sealing ring (17, 18, 19, 20) or the shaft sealing rings (17, 18, 19, 20) are embodied as a touching or contactless seal.

## Revendications

1. Dispositif (1) de lubrification d'un palier (3) à roulement d'un moteur (4) électrique, comprenant une chambre (6) de réservoir d'huile pouvant être mise sur un côté extérieur ou un côté intérieur du moteur (4) électrique et ayant un puisard (7) d'huile et un anneau (9) de transport d'huile ou un disque de transport d'huile, tournant directement ou indirectement sur un arbre (5) du moteur (4) électrique et passant dans le puisard (7) d'huile, anneau ou disque par lequel, lors de la rotation de l'arbre (5), de l'huile peut être transportée du puisard (7) d'huile dans un espace (14) de lubrification disposé autour de l'arbre (5) et au voisinage du palier (3) à roulement,
• dans lequel, dans une paroi (3) extérieure radiale de l'espace (14) de lubrification, sont prévues une ou plusieurs ouvertures (25), par lesquelles de l'huile peut retourner de l'espace (14) de lubrification au puisard (7) d'huile,
• dans lequel, au voisinage de l'espace (14) de lubrification, en s'éloignant dans la direction axiale du moteur (4) électrique, est monté, sur l'arbre (5), un disque (10) extérieur centrifuge et dans lequel, dans la direction axiale vers le moteur (4) électrique, est monté, sur l'arbre (5) un disque (12) intérieur centrifuge et
• dans lequel le disque (10) extérieur centrifuge et le disque (12) intérieur centrifuge ont chacun, sur une face tournée vers l'espace (14) de lubrification, une cannelure (10.1, 12.1) faisant le tour, dont la section transversale, dans la direction d'une face extérieure radiale du disque (10, 12) centrifuge respectif, a un rayon plus petit que dans la direction d'une face intérieure radiale du disque (10, 12) centrifuge respectif.

2. Dispositif (1) suivant la revendication 1, dans lequel, sur l'arbre (5) est monté un manchon (8) sur lequel passe l'anneau (9) de transport d'huile.

3. Dispositif (1) suivant l'une des revendications 1 ou 2, dans lequel l'anneau (9) de transport d'huile a un diamètre intérieur nettement plus grand qu'un diamètre extérieur de l'arbre (5) et/ou du manchon (8).

4. Dispositif (1) suivant l'une des revendications précédentes, dans lequel le manchon (8) ou l'arbre (5) a une surface (8.1) extérieure, dont le diamètre diminue axialement en s'éloignant du palier (3) à roulement.

5. Dispositif (1) suivant l'une des revendications précédentes, dans lequel le manchon (8) ou l'arbre (5) a une surface (8.1) extérieure, dans laquelle est prévu un épaulement (8.2) ou une rainure faisant le tour, dont le diamètre est réduit en forme de palier par rapport à une partie voisine de la surface (8.1) extérieure, afin de maintenir l'anneau (9) de transport d'huile à l'intérieur de l'épaulement (8.2) en une position axiale déterminée sur le manchon (8) ou l'arbre (5).

6. Dispositif (1) suivant l'une des revendications précédentes, dans lequel un ou plusieurs joints (17, 18, 19, 20) d'étanchéité d'arbre sont prévus pour rendre l'arbre (5) étanche dans la direction axiale derrière le palier (3) à roulement vers le moteur (4) électrique et/ou de l'espace (14) de lubrification vis-à-vis d'une atmosphère extérieure.

7. Dispositif (1) suivant l'une des revendications précédentes, dans lequel un canal (16) de retour est prévu pour retourner de l'huile d'une partie derrière le palier (3) à roulement au puisard (7) d'huile.

8. Dispositif (1) suivant l'une des revendications 6 et 7, dans lequel derrière le palier (3) à roulement, dans la direction allant vers le moteur (4) électrique, sont montés, l'un après l'autre, deux joints (19, 20) d'étanchéité d'arbre, dans lequel il est prévu, entre les deux joints (19, 20) d'étanchéité d'arbre, un canal (21) de compensation de la pression, qui communique avec une atmosphère extérieure du moteur (4) électrique.

9. Dispositif (1) suivant l'une des revendications précédentes, dans lequel l'anneau (9) de transport d'huile a une section transversale à peu près trapézoïdale, le plus long des deux côtés parallèles du trapèze étant tourné vers l'intérieur.

10. Dispositif (1) suivant l'une des revendications précédentes, dans lequel, dans la chambre (6) de réservoir d'huile, est prévue une ouverture (22) d'entrée d'huile et, sur un fond du puisard (7) d'huile, une ouverture de sortie d'huile pouvant être fermée par une vis (24) d'évacuation d'huile.

11. Dispositif (1) suivant la revendication 10, dans lequel il est prévu, dans la chambre (6) de réservoir d'huile, une évacuation d'huile, de manière à ce que la chambre (6) de réservoir d'huile puisse être incorporée à un circuit d'huile par l'ouverture (22) d'arrivée d'huile et par l'évacuation d'huile.

12. Dispositif (1) suivant l'une des revendications précédentes, dans lequel un hublot (23) est monté dans la chambre (6) de réservoir d'huile.

13. Dispositif (1) suivant l'une des revendications 6 à 12, dans lequel le joint (17, 18, 19, 20) d'arbre ou les joints (17, 18, 19, 20) d'arbre sont constitués sous la forme d'une étanchéité avec contact ou sans contact.
